Europäisches Patentamt

**European Patent Office**

Office européen des brevets

(11) Numéro de publication: **0 041 008**
A1

(12) **DEMANDE DE BREVET EUROPEEN**

(21) Numéro de dépôt: **81400767.0**

(22) Date de dépôt: **14.05.81**

(51) Int. Cl.³: **B 05 B 5/04,** F 16 C 17/12

(30) Priorité: **27.05.80 FR 8011673**

(71) Demandeur: **Marchand, Bernard, 32 avenue des Sapins, F-93220 Gagny (FR)**

(43) Date de publication de la demande: **02.12.81 Bulletin 81/48**

(72) Inventeur: **Delaporte, Georges, 21 avenue des Frênes, F-93220 Gagny (FR)**
Inventeur: **Marchand, Bernard, 32 avenue des Sapins, F-93220 Gagny (FR)**

(84) Etats contractants désignés: **AT BE CH DE GB IT LI LU NL SE**

(74) Mandataire: **Armengaud, Alain, Cabinet ARMENGAUD AINE 3, Avenue Bugeaud, F-75116 Paris (FR)**

(54) **Tête atomisante rotative pour appareils d'application, par voie électrostatique, de produits liquides, tels que notamment peintures et vernis.**

(57) Tête atomisante rotative pour appareil d'application de produits liquides, tels que, notamment, peintures et vernis, sur des objets, par voie électrostatique, du type à disque ou à coupelle monté à l'extrémité d'un arbre tournant librement à grande vitesse dans un palier, caractérisée en ce que ledit palier est un palier aérostatique, et en ce que le guidage en rotation de l'arbre en mouvement (12) s'effectue dans un logement par l'intermédiaire d'un film d'un gaz, tel que de l'air, s'écoulant entre les parties fixes (40, 42, 44) dudit logement et les surfaces tournantes dudit arbre, assurant ainsi une sustentation totale de ce dernier sans contact ni frottement direct entre les surfaces fixes dudit logement et tournantes dudit arbre.

EP 0 041 008 A1

0041008

# TETE ATOMISANTE ROTATIVE POUR APPAREIL D'APPLICATION, PAR VOIE ELECTROSTATIQUE, DE PRODUITS LIQUIDES, TELS QUE, NOTAMMENT, PEINTURES ET VERNIS

—————————

La présente invention est relative à une tête atomisante rotative à grande vitesse pour des appareils d'application, par voie électrostatique, de produits liquides tels que, notamment, des peintures, vernis et similaires sur des objets.

Il existe à l'heure actuelle des appareils d'application électrostatique à tête atomisante du type à disque ou à coupelle tournant à une vitesse de l'ordre de 1 000 à 100 000 t/minute, et dont les diamètres varient entre 30 et 700 mm. Ce disque, ou cette coupelle, est généralement monté à l'extrémité d'un arbre rotatif.

Le disque ou la coupelle qui constitue l'organe d'atomisation proprement dit est essentiellement constitué d'une surface de révolution avec une alimentation de peinture soit centrale, soit réalisée sous forme d'évidement annulaire, dans lequel aboutissent le ou les conduits d'amenée de la peinture. Sous l'effet de la rotation du disque ou de la coupelle, la peinture s'étale sur les parois internes de la chambre d'alimentation, et elle constitue ainsi un film continu qui, toujours sous l'effet de la rotation et grâce à une forme appropriée des parois internes, gagne les faces d'écoulement et d'atomisation du disque ou de la coupelle. Dans le cas d'une alimentation de peinture centrale, il convient de réaliser une amenée de celle-ci par un conduit traversant l'arbre de rotation longitudinalement par une cavité centrale ménagée dans celui-ci, que l'on désigne communément "arbre creux". L'alimentation de peinture dans un évidement annulaire du disque ou de la coupelle s'effectue sur le côté de l'arbre d'entraînement. Le mode d'alimentation de peinture centrale par arbre creux permet une exécution simplifiée des formes intérieures

0041008

du disque ou de la coupelle d'atomisation particulièrement favorable pour la répartition du produit à atomiser et pour le rinçage, notamment lors des changements de couleur.

Suivant le type de tête atomisante, et surtout suivant leur vitesse de rotation, la pulvérisation s'effectue soit exclusivement sous l'effet de la force centrifuge engendrée par la rotation, soit par double pulvérisation, c'est-à-dire à la fois sous l'effet de la force centrifuge et du champ électrique. De même, la projection des particules sur les objets peut intervenir soit exclusivement sous l'effet du champ électrique, soit résulter d'une combinaison dudit champ électrique et de la force centrifuge.

Les têtes atomisantes sont portées à un potentiel électrique élevé, généralement compris entre 10 000 et 150 000 volts, servant, suivant le cas, soit à la fois à la pulvérisation du produit et à la précipitation des particules ainsi obtenues sur les objets à revêtir, soit exclusivement à la précipitation desdites particules sur lesdits objets, ces derniers se trouvant nécessairement au potentiel zéro, c'est-à-dire, en pratique, reliés à la terre.

Il convient de noter que, dans le cas d'une tête atomisante du type à disque, les objets à revêtir sont généralement situés radialement, alors que, pour le type à coupelle, ceux-ci sont le plus souvent situés perpendiculairement à l'axe de la coupelle.

Les organes d'atomisation proprement dits, c'est-à-dire le disque ou la coupelle, sont généralement montés à l'extrémité d'un arbre tournant librement dans un palier à coussin et à glissement ou à roulements à billes. L'entraînement en rotation s'effectue au moyen de moteurs de tous genres, par exemple électrique, pneumatique ou oléohydraulique à accouplement direct ou par l'intermédiaire d'une transmission à renvoi.

Les moteurs pneumatiques sont essentiellement utilisés à accouplement directs, dans les cas de vitesses de rotation élevées. Ceux-ci sont du type à palettes ou à turbine, pouvant notamment, en ce qui concerne ce dernier type, résulter d'une construction combinée avec le

- 3 -                                    0041008

palier de rotation des têtes.

Jusqu'à présent, la rotation de l'arbre portant la tête atomisante s'effectuait, pour les basses vitesses, sur des coussinets lisses à glissement direct sec ou lubrifié et, pour les vitesses plus élevées, sur roulements à billes.

L'emploi des coussinets lisses a été limité aux basses vitesses, en raison de l'importance des résistances de frottement de glissement des surfaces en contact.

L'emploi des roulements à billes permet d'atteindre les vitesses de rotation élevées requises, à savoir jusqu'à 100 000 t/mn, à condition d'un dimensionnement desdits roulements sensiblement en raison inverse de leur vitesse de rotation. Il en résulte que l'accroissement de la vitesse de rotation a pour conséquence directe, d'une part une limitation du diamètre de l'arbre, et, d'autre part, une diminution de la capacité de charge des roulements, qui est fonction de leurs dimensions. Cela se traduit donc, d'une part par une augmentation du facteur d'usure, et, d'autre part, par certaines contraintes ou restrictions techniques, concernant la réalisation et le dimensionnement de l'arbre.

Les roulements à billes sont nécessairement lubrifiés soit d'emblée et d'une façon définitive à la graisse, soit en permanence, à l'aide d'un brouillard d'huile mélangé à de l'air. Dans ce dernier cas, les facteurs de vitesse et d'usure des roulements se trouvent nettement améliorés, mais, par contre, ce mode de lubrification donne lieu à des risques de fuites d'huile, susceptible d'être projetée sur les objets à revêtir.

Le courant électrique de haute tension à laquelle se trouve portée la tête atomisante provient d'une source de haute tension connectée directement ou par câble sur les parties fixes de la tête. Le passage de ce courant électrique de haute tension entre les parties fixes et l'arbre tournant dont le disque ou la coupelle est solidaire s'effectue, suivant le cas, soit par contact direct entre les coussinets et l'arbre, soit au travers des roulements à billes, soit encore par frotteur de contact fixe, sous forme de balai à charbon, par exemple, appliqué par un système élastique sur une surface quelconque de l'arbre, ou de toute autre partie tournante solidaire de celui-ci.

Dans le cas d'une alimentation de peinture centrale, c'est-à-dire nécessairement par arbre creux, comme on l'a vu ci-dessus, la relation entre le diamètre des roulements et la vitesse de rotation constitue également une limitation de ladite vitesse en fonction du diamètre minimal des roulements déterminé par le diamètre de l'arbre creux pratiquement réalisable.

Cette invention se propose d'apporter un perfectionnement aux têtes atomisantes rotatives des types décrits ci-dessus, en leur appliquant un palier aérostatique qui, ainsi qu'on le sait, consiste, dans son principe, en un arbre cylindrique tournant dans un logement de même forme par sustentation au moyen d'une veine d'un gaz, par exemple de l'air.

En conséquence, cette invention a pour objet une tête atomisante rotative pour appareil d'application, par voie électrostatique, de produits liquides tels que, notamment, peintures, vernis et similaires, sur des objets, du type à disque et à coupelle, montés à l'extrémité d'un arbre tournant librement à grande vitesse dans un palier, cette tête étant caractérisée en ce que ledit palier est un palier aérostatique, et en ce que le guidage en rotation de l'arbre en mouvement s'effectue dans un logement par l'intermédiaire d'un film d'un gaz, tel que de l'air, s'écoulant entre les parties fixes dudit logement et les surfaces tournantes dudit arbre, assurant ainsi une sustentation totale de ce dernier sans contact ni frottement direct entre les surfaces fixes dudit logement et tournantes dudit arbre.

On limite ainsi les résistances de glissement au seul frottement de l'air dans le logement, d'une part, et sur l'arbre rotatif, d'autre part, ce qui permet d'obtenir des vitesses circonférentielles de l'arbre, et donc de rotation, très élevées, sans risquer l'échauffement ni l'usure des surfaces portantes. Par ailleurs, les pertes de puissance par frottement sont tout à fait négligeables.

0041008

Selon l'invention, le logement du palier de guidage de l'arbre en rotation est réalisé sous la forme d'un fourreau constitué par l'assemblage d'un certain nombre d'éléments ou coussinets montés dans le corps de la tête atomisante, et il comporte une ou plusieurs portées de guidage radial et une ou plusieurs portées de guidage axial, ou butées axiales, pouvant être situées soit entre deux portées de guidage radial, soit en dehors de celles-ci, à l'extrémité de l'arbre.

Selon une caractéristique de cette invention, le film de gaz de sustentation, de préférence de l'air, est obtenu à partir d'un système d'alimentation en air comprimé comprenant une pluralité d'orifices d'injection ménagés, selon des directions radiales, dans lesdits coussinets, et des orifices d'injection ménagés, selon une direction axiale, dans les parties fixes de la ou des butées axiales.

Selon une autre caractéristique de cette invention, l'échappement du gaz, après écoulement entre les surfaces portantes radiales et axiales, fixes et tournantes, s'effectue au droit des bords desdites surfaces, dans des chambres de détente reliées à l'atmosphère par des conduits ménagés dans le corps de la tête.

Selon l'invention, le diamètre des orifices d'injection de l'air, leur nombre, leur répartition dans chaque coussinet ou butée axiale, ainsi que l'épaisseur de la veine d'air, déterminée par le jeu entre les surfaces portantes fixes et tournantes, sont définis en fonction des diamètres et des longueurs des surfaces de sustentation de façon à obtenir, dans les interstices entre celles-ci, une répartition des pressions et un écoulement de l'air conférant des forces portantes optimales. La pression de l'air d'alimentation des orifices d'injection des coussinets et des butées axiales n'est pas critique ; en pratique, on adopte les pressions disponibles des réseaux industriels courants, c'est-à-dire entre 0 et 10 bar.

La pression de l'air, ainsi que la grandeur des surfaces portantes des coussinets et des butées axiales, sont des paramètres déterminants des forces portantes du palier, variables dans le même sens.

L'organe d'atomisation proprement dit, du type à disque ou à coupelle, est généralement monté à une extrémité de l'arbre, laquelle extrémité peut éventuellement être aménagée directement sous forme de disque ou de coupelle d'atomisation du produit à appliquer. L'entraînement en rotation de l'arbre peut être effectué par tous types de moteurs, et par tout mode de liaison à accouplement direct ou par renvoi.

Dans le cas de moteurs pneumatiques, l'élément moteur, tel que turbine par exemple, peut être adapté directement sur l'arbre, en tout endroit voulu de celui-ci, par exemple à une extrémité, ou entre les surfaces portantes radiales ou butées axiales.

Comme pour les têtes atomisantes rotatives à coussinets ou à roulements à billes, le courant électrique de haute tension est connecté sur une partie fixe quelconque de la tête atomisante, ou éventuellement directement sur l'arbre, par tout circuit de conduction direct ou résistant.

Le passage de ce courant électrique entre les parties fixes et les parties tournantes de l'arbre portant le disque ou la coupelle d'atomisation peut s'effectuer soit, de préférence, par frotteur de contact fixe appliqué sur une surface quelconque de l'arbre ou de toute autre partie tournante solidaire de celui-ci, soit simplement par étincelage entre les surfaces portantes fixes du logement et tournantes de l'arbre, en raison du faible jeu entre celles-ci.

D'autres caractéristiques et avantages de cette invention ressortiront de la description faite ci-après, en référence aux dessins annexés, qui en illustrent divers exemples de réalisation non limitatifs. Sur les dessins :

- la figure 1 est une vue en coupe axiale longitudinale d'un exemple de réalisation de l'invention, appliqué à une tête atomisante à disque ;

- la figure 2 est une vue partielle illustrant l'application de ce premier exemple de réalisation à une tête atomisante à coupelle, et,

- la figure 3 illustre un second exemple de réalisation de l'invention.

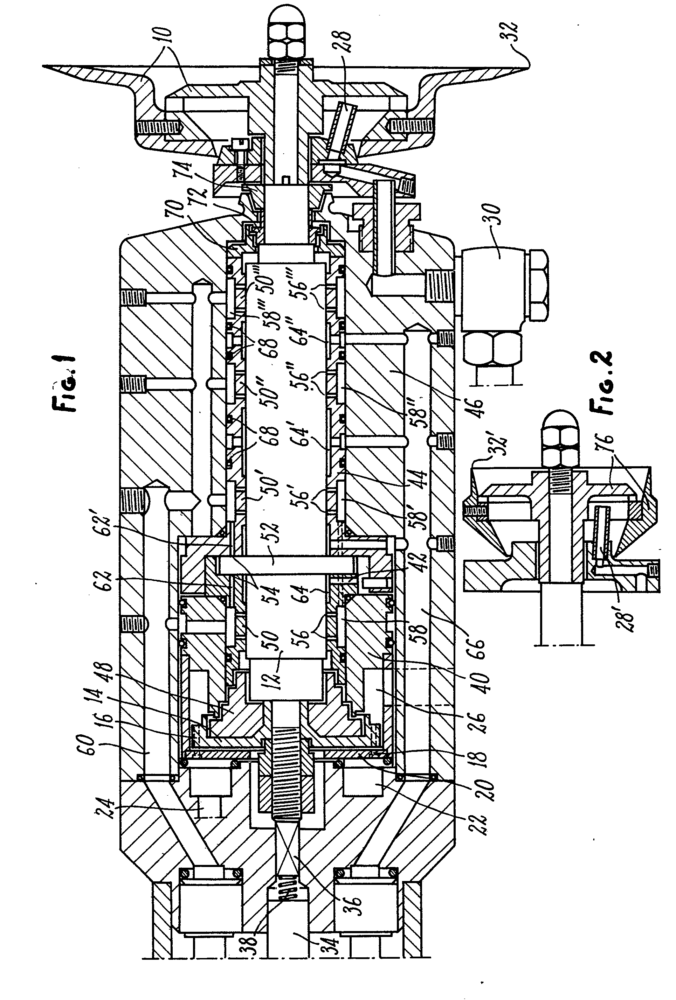

On se réfère en premier lieu à la figure 1, qui illustre un mode d'application de l'invention à une tête atomisante à disque.

Le disque 10 est monté à l'extrémité d'un arbre 12 tournant à grande vitesse. Dans cet exemple de réalisation, l'arbre et le disque sont entraînés par une turbine 14, montée à l'extrémité de l'arbre 12. La rotation de cette turbine est engendrée par la poussée, sur ses parties actives 16, de jets d'air inclinés, formés par les ajutages 18 d'un injecteur 20 débouchant dans une chambre 22, alimentée en air comprimé par une canalisation 24. Après avoir traversé les parties actives de la turbine 14, l'air moteur s'échappe dans une chambre de détente 26, en communication avec l'atmosphère.

Le liquide à atomiser, tel que, par exemple, une peinture ou un vernis, est introduit dans le moyeu du disque 10 par l'intermédiaire d'un injecteur 28, communiquant avec un conduit d'alimentation 30. Sous l'effet de la rotation du disque, le liquide à atomiser se répand sur les parois internes de ce disque, jusqu'aux arêtes de pulvérisation 32.

Le courant électrique de haute tension est amené par un câble électrique (non représenté) sur un connecteur 34, raccordé sur une partie fixe de la tête atomisante. Le passage du courant électrique entre les parties fixes et les parties tournantes de la tête s'effectue à l'aide d'un frotteur à charbon 36, appliqué axialement en bout d'arbre par un ressort de pression 38.

L'arbre 12 est pourvu, selon l'invention, d'un palier aérostatique.

Ce palier de guidage de l'arbre se présente, dans cet exemple de réalisation non limitatif, sous la forme d'un fourreau constitué par l'assemblage de trois éléments ou coussinets 40, 42 et 44, montés dans le corps 46 de la tête atomisante. Le palier comporte au moins une

- 8 -

0041008

portée de guidage radial, ou portée radiale, et au moins une portée de guidage axial, ou butée axiale.

Dans cet exemple de réalisation, le palier de guidage est pourvu de quatre portées radiales 50, 50', 50", 50"', et d'une butée axiale 52, à double face de guidage 54, située entre les portées radiales. Dans ce mode de réalisation, les portées radiales sont réparties à raison de trois portées 50', 50", 50''', du côté du disque 10, et une portée 50 du côté de la turbine d'entraînement 14. Les orifices 56, 56', 56" et 56''' d'injection de l'air de sustentation radiale consistent, pour chaque coussinet, en deux rangées circulaires de huit trous équidistants, débouchant dans des évidements annulaires 58, 58', 58", 58''', alimentés en air comprimé par des conduits 60, ménagés dans le corps de la tête atomisante.

La butée axiale 52 est alimentée, sur ses deux faces 54, respectivement par deux séries circulaires de huit orifices d'injection en direction axiale, tels que 62, 62', débouchant dans les évidements annulaires 58, 58', 58" et 58"' d'alimentation des coussinets voisins. L'échappement de l'air, après écoulement entre les surfaces portantes radiales et axiales, s'effectue dans des chambres de détente 64, 64', 64", se présentant également sous la forme d'évidements annulaires, reliées à l'atmosphère par l'intermédiaire de conduits d'échappement tels que 66, ménagés dans le corps de la tête. L'étanchéité entre les différentes chambres d'alimentation et de détente, c'est-à-dire d'échappement, est assurée au moyen de joints annulaires tels que 68.

A chacune de ses extrémités, le palier de guidage comporte un système de chicanes 48, 70, 72, 74, ayant pour fonction d'empêcher la pénétration dans la tête d'impuretés pouvant provenir, du côté du disque, des produits atomisés ou de nettoyage, et, du côté de la turbine 14, de l'air d'entraînement de cette dernière.

L'exemple de réalisation représenté partiellement à la Figure 2 diffère de celui décrit ci-dessus, en référence à la Figure 1, par l'utilisation d'une tête comportant une coupelle 76.

De la description qui précède, on comprend que l'arbre en rotation 12 est maintenu dans son logement, réalisé par les coussinets, par

BAD ORIGINAL

0041008

sustentation au moyen d'une veine d'air ou d'un autre gaz.

En fonctionnement normal, les surfaces de l'arbre 12 en mouvement et les surfaces fixes des coussinets ne sont pas en contact direct, si bien que le glissement entre ces deux surfaces s'effectue par l'intermédiaire d'un film d'air s'écoulant entre celles-ci.

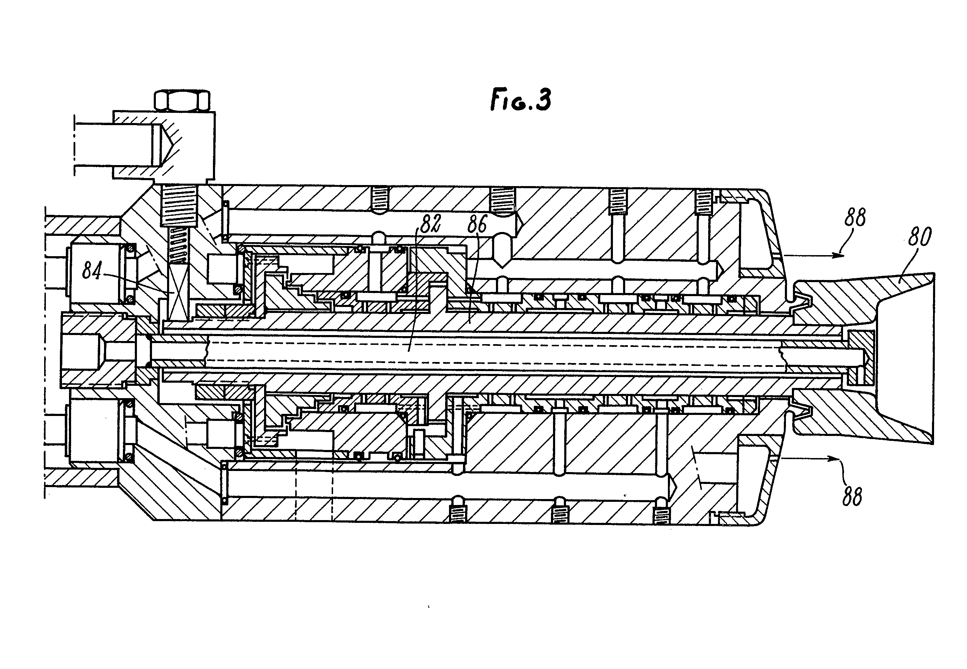

La figure 3 illustre, à titre d'exemple, un mode de réalisation d'une tête atomisante à disque ou à coupelle, avec palier aérostatique à arbre creux prévu pour une alimentation centrale du produit liquide à atomiser.

Selon cet exemple, le produit à atomiser est introduit au centre de la coupelle ou du disque 80 par un conduit fixe d'amenée de produit 82, traversant longitudinalement l'arbre tournant 86 par un alésage prévu selon l'axe de ce dernier. Dans cette variante, le frotteur à charbon 84, assurant le passage du courant à haute tension entre les parties fixes et tournantes, est appliqué perpendiculairement à l'arbre, c'est-à-dire sur la partie cylindrique de celui-ci, cette disposition ne constituant, bien évidemment, qu'un exemple de réalisation non limitatif.

La conception, la réalisation et le fonctionnement du palier sont, par ailleurs, identiques à ceux décrits ci-dessus, en référence à la figure 1.

Dans le cas de coupelles atomisantes tournant à grande vitesse, c'est-à-dire lorsque l'atomisation s'effectue exclusivement sous l'effet de la force centrifuge, les particules de produit atomisées sont placées dans le champ électrique, et, éventuellement, propulsées vers l'avant sur les pièces à revêtir, au moyen d'une couronne de jets d'air de soufflage 88, concentrique à la coupelle.

Parmi les avantages apportés par le dispositif selon l'invention, en regard des solutions classiques, on peut citer notamment :

- réduction considérable des pertes de puissance par frottement de roulement ou de glissement de l'arbre dans son palier ;

- 10 - 0041008

- possibilité d'avoir, pour des vitesses de rotation élevées (supérieures à 30 000 t/mn), un arbre de diamètre suffisant pour réaliser la variante dite "arbre creux", permettant une alimentation centrale au travers de l'arbre du produit à atomiser ;

- dispense de lubrification ;

- usure et échauffement pratiquement négligeables, en raison de l'absence de frottement direct entre parties tournantes et fixes, ce qui se traduit par des pertes de puissance par frottement tout à fait négligeables.

Il demeure bien entendu que cette invention n'est pas limitée aux exemples de réalisation décrits et représentés ici, mais qu'elle en englobe toutes les variantes.

- 1 -

0041008

REVENDICATIONS DE BREVET

1 - Tête atomisante rotative pour appareil d'application de produits liquides, tels que, notamment, peintures et vernis, sur des objets, par voie électrostatique, du type à disque ou à coupelle monté à l'extrémité d'un arbre tournant librement à grande vitesse dans un palier, caractérisée en ce que ledit palier est un palier aérostatique, et en ce que le guidage en rotation de l'arbre en mouvement (12) s'effectue dans un logement par l'intermédiaire d'un film d'un gaz, tel que de l'air, s'écoulant entre les parties fixes (40, 42, 44) dudit logement et les surfaces tournantes dudit arbre, assurant ainsi une sustentation totale de ce dernier sans contact ni frottement direct entre les surfaces fixes dudit logement et tournantes dudit arbre.

2 - Tête atomisante selon la revendication 1, caractérisée en ce que le logement du palier de guidage de l'arbre en rotation (12) est réalisé sous la forme d'un fourreau constitué par l'assemblage d'un certain nombre de coussinets (40, 42, 44) montés dans le corps (46) de la tête, et il comporte au moins une portée de guidage radial (50, 50', 50", 50"'), et au moins une portée de guidage axial (52) pouvant être située soit entre deux portées de guidage radial, soit en dehors de celles-ci, à l'extrémité de l'arbre.

3 - Tête atomisante selon l'une des revendications 1 ou 2, caractérisée en ce que le film de gaz de sustentation, de préférence de l'air, est obtenu à partir d'un système d'alimentation en air comprimé qui comprend une pluralité d'orifices d'injection (56, 56", 56"') ménagés, selon des directions radiales, dans lesdits coussinets, et des orifices d'injection (62, 62') ménagés, selon une direction axiale, dans les parties fixes de la ou des butées axiales (52).

4 - Tête atomisante selon l'une quelconque des revendications précédentes, caractérisée en ce que les orifices d'injection (56, 56', 56", 56"' et 62, 62') sont alimentés en gaz, de préférence en air comprimé, par l'intermédiaire d'évidements annulaires (58, 58', 58") alimentés par des conduits (60) ménagés dans le corps de la tête, et en ce que l'échappement de gaz, après écoulement entre les surfaces portantes radiales et axiales, fixes et tournantes, s'effectue au droit des bords desdites surfaces, dans des chambres de détente (64, 64', 64") reliées à l'atmosphère par des conduits (66) ménagés dans le corps de la tête.

5 - Tête atomisante selon l'une quelconque des revendications précédentes, caractérisée en ce que, à chacune de ses extrémités, le palier aérostatique comporte un système de chicanes (48, 70, 72, 74) empêchant la pénétration d'impuretés pouvant provenir, du côté disque, des produits atomisés ou de nettoyage, et, du côté de la turbine d'entraînement (14), de l'air moteur.

6 - Tête atomisante selon l'une quelconque des revendications précédentes, caractérisée en ce que l'alimentation du produit atomisé dans le disque (10) ou la coupelle (76) s'effectue sur le côté de l'arbre rotatif (12), par l'intermédiaire d'un injecteur (28, 28') alimenté par une conduite (30).

7 - Tête atomisante selon l'une quelconque des revendications 1 à 5, caractérisée en ce qu'elle comporte un arbre rotatif creux (86) dont l'alésage axial (82) assure une alimentation centrale du produit atomisé.

8 - Tête atomisante selon l'une quelconque des revendications précédentes, caractérisée en ce que l'arbre rotatif est entraîné par tous types de moteurs, tels que, notamment, électrique, oléohydraulique, pneumatique, à palettes ou à turbine, la construction dudit moteur pouvant être combinée avec celle du palier.

9 - Tête atomisante selon l'une quelconque des revendications précédentes, caractérisée en ce que l'arbre en rotation (12) est entraîné par un moteur se trouvant au même potentiel électrique que celui auquel est portée la tête.

10 - Tête atomisante selon l'une quelconque des revendications précédentes, caractérisée en ce que l'arbre en rotation (12) est

0041008

entraîné par un moteur à la masse, une transmission isolante étant prévue entre l'arbre du palier porté à la haute tension et le moteur.

11 - Tête atomisante selon l'une quelconque des revendications précédentes, caractérisée en ce que le passage du courant de haute tension entre les parties fixes et les parties tournantes s'effectue par frotteur de contact (36, 84).

12 - Tête atomisante selon l'une quelconque des revendications précédentes, caractérisée en ce que le passage du courant haute tension entre les parties fixes et les parties tournantes s'effectue par étincelage entre lesdites parties.

13 - Tête atomisante selon l'une quelconque des revendications précédentes, caractérisée en ce que le raccordement du courant de haute tension sur les parties fixes et/ou l'arbre en rotation s'effectue soit directement, soit par l'intermédiaire d'un circuit résistant ou semiconducteur.

14 - Tête atomisante selon l'une quelconque des revendications précédentes, caractérisée en ce que le raccordement du courant de haute tension est effectué par câble à partir d'une source électrique éloignée, ou à l'aide d'une connexion rigide avec la source électrique de haute tension adjacente à la tête ou incorporée à celle-ci.

15 - Tête atomisante selon l'une quelconque des revendications précédentes, caractérisée en ce que, lorsque l'atomisation s'effectue exclusivement sous l'effet de la force centrifuge, les particules de produit atomisés sont placées dans le champ électrique et propulsées vers l'avant, sur les pièces à revêtir, au moyen d'une couronne de jets d'air de soufflage (88) concentriques à la coupelle ou au disque.

Fig.1

Fig.2

1/2

0041008

Fig.3

0041008

**Office européen des brevets**

## RAPPORT DE RECHERCHE EUROPEENNE

Numéro de la demande

EP 81 40 0767

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| X | <u>DE - C - 973 478</u> (METALLGESELL-SCHAFT AG)<br>* Page 2, lignes 111-126; page 3, lignes 1-10; figure 3 *<br><br>-- | 1,7,8, 15 | B 05 B 5/04<br>F 16 C 17/12 |
| X | <u>BE - A - 654 767</u> (WESTWIND DEVEL-OPMENTS LTD.)<br>* En entier *<br><br>-- | 1-4,8 | |
| | <u>GB - A - 1 072 684</u>(INTERWOOD LTD)<br>* En entier *<br><br>-- | 1-3,8 | **DOMAINES TECHNIQUES RECHERCHES (Int. Cl.³)** |
| | <u>FR - A - 2 336 181</u> (MARCHAND)<br>* En entier *<br><br>-- | 5,6,8, 9,11, 13,14 | B 05 B<br>F 16 C<br>B 23 Q |
| | <u>FR - A - 1 110 350</u> (S.A.M.E.S.)<br>* Figures 1,2; page 1, colonne de droite, avant dernier paragraphe; page 2, colonne de gauche, paragraphes 6,7 *<br><br>-- | 7,8, 10,14 | |
| | <u>FR - A - 2 336 183</u> (MARCHAND)<br>* En entier *<br><br>---- | 6,8,15 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 28-08-1981 | COLPAERT |

OEB Form 1503.1   06.78